# EUROPÄISCHE PATENTSCHRIFT

(11) **EP 2 885 331 B1**
(45) Veröffentlichungstag und Bekanntmachung des Hinweises auf die Patenterteilung: **25.09.2019**
(21) Anmeldenummer: 13750330.6
(22) Anmeldetag: 16.08.2013
(51) Int. Cl.: C08G 18/40, C08G 18/58, C08J 5/24

(54) **FASERVERSTÄRKTE VERBUNDBAUTEILE UND DEREN HERSTELLUNG**
FIBRE COMPOUND COMPONENTS AND PRODUCTION OF SAME
COMPOSANT COMPOSITE EN FIBRE ET SA FABRICATION

(30) Priorität: 20.08.2012 EP 12180970
(43) Veröffentlichungstag der Anmeldung: 24.06.2015
(73) Patentinhaber: Covestro Deutschland AG, 51373 Leverkusen (DE)
(72) Erfinder: HUPKA, Florian, 40589 Düsseldorf (DE); SCHORNSTEIN, Marcel, 41462 Neuss (DE); WEGENER, Dirk, 40789 Monheim (DE); RASSELNBERG, Harald, 41541 Dormagen (DE)
(74) Vertreter: Levpat
(86) Internationale Anmeldenummer: PCT/EP2013/067163
(87) Internationale Veröffentlichungsnummer: WO 2014/029701

(56) Entgegenhaltungen:
- WO-A1-2008/147641
- WO-A1-2012/022683
- DE-A1- 4 416 323

## Beschreibung

Die vorliegende Erfindung betrifft Faserverbundbauteile, die z.B. durch Tränken von Fasern mit einer Reaktionsharzmischung aus Polyisocyanaten, Polyepoxiden, Polyolen, latenten Katalysatoren sowie gegebenenfalls Additiven erhältlich sind, sowie ein Verfahren zu deren Herstellung.

Faserverbundmaterialien auf Kunststoffbasis werden häufig als Konstruktionsmaterial verwendet, da diese eine hohe mechanische Festigkeit verbunden mit geringem Gewicht aufweisen. Dabei besteht das Matrixmaterial üblicherweise aus ungesättigten Polyesterharzen, Vinylesterharzen und Epoxidharzen.

Faserverbundwerkstoffe können beispielsweise im Flugzeugbau, im Automobilbau oder in Rotorblättern von Windkraftanlagen eingesetzt werden.

DE-A 4416323 beschreibt Wärme härtbare Reaktionsharzgemische, die organische Polyisocyanate, Epoxidgruppen aufweisende organische Verbindungen und Gemische aus bestimmten tertiären Aminen (Katalysatoren) enthalten. Die Reaktionsharzgemische werden bei Temperaturen bis zu 80°C angehärtet und bei Temperaturen von 100 bis 200 °C nachgehärtet. Nachteil bei diesen Reaktionsharzgemischen ist, dass sie erst bei hohen Temperaturen aushärten und lange Zykluszeiten haben, was wiederum zu hohen Energie- und Herstellungskosten führt.

WO 2008/147641 beschreibt die Herstellung einer ausgehärteten Zusammensetzung, die aus blockierten Isocyanaten, einem Epoxyharz und einem Katalysator hergestellt wird, wobei mindestens ein Oxazolidon- und Isocyanuratring gebildet wird. Die Zusammensetzung kann als Lack oder zur Herstellung von Kompositmaterialien verwendet werden. Nachteilig an dieser Zusammensetzung ist, dass in einem mehrstufigen Prozess erst das Polyurethanprepolymer hergestellt werden muss, das dann zu einem blockierten Prepolymer umgesetzt wird, welches als Reaktivharzkomponente eingesetzt werden kann.

WO 2012/022683 beschreibt flächige Faserverbundbauteile, die durch Tränken von Fasern mit einer Reaktionsharzmischung aus Polyisocyanaten, Polyepoxiden, Polyolen sowie gegebenenfalls Additiven erhältlich sind, wobei kein Oxazolidinonring gebildet wird. Die Reaktionsharze werden bei Temperaturen von 20 bis 120 °C ausgehärtet. Nachteilig bei diesen Reaktionsharzgemischen sind die lange Temperzeit von mehreren Stunden sowie der Viskositätsanstieg des Reaktionsgemisches nach dem Vermischen.

Die bisher eingesetzten Reaktionsharze haben den Nachteil, dass es sehr lange dauert, bis die Reaktivharzmischung ausgehärtet ist, was zu einer geringen Produktivität führt. Zur Erhöhung der Produktivität ist es nötig, die Zykluszeit bei der Herstellung zu verringern. Dabei ist es wichtig, dass das Reaktionsharzgemisch lange dünnflüssig ist, um die Fasern komplett zu tränken, insbesondere bei großen Formteilen. Auf der anderen Seite sollte die Härtezeit möglichst kurz sein, um die Zykluszeit zu verringern. Aus wirtschaftlichen Gründen ist eine niedrige Aushärtetemperatur wünschenswert, da sich dadurch Energiekosten sparen lassen. Aus sicherheitstechnischen Gründen ist eine hohe Flammwidrigkeit der Faserverbundbauteile eine wünschenswerte Eigenschaft, da sie die Sicherheit der Endanwendung (z.B. eines Rotorblattes, eines Karosserieteiles) erhöht.

Aufgabe der vorliegenden Erfindung war es daher, ein Matrixmaterial zur Verfügung zu stellen, das eine gute Tränkung und Benetzung der Fasern ermöglicht, lange dünnflüssig ist (eine lange Topfzeit besitzt) und gleichzeitig eine schnelle Aushärtung und gute mechanische Eigenschaften gewährleistet. Gleichzeitig sollte das fertige Formteil eine gute Hitzestabilität aufweisen.

Diese Aufgabe konnte überraschenderweise durch Faserverbundbauteile gelöst werden, die aus Fasern und Reaktionsharzmischungen aus Polyisocyanaten, Polyepoxiden, Polyolen, latenten Katalysatoren sowie gegebenenfalls üblichen Additiven erhältlich sind, wobei ein großer Überschuss an Isocyanatgruppen im Verhältnis zur Anzahl an OH-Gruppen eingesetzt wird.

Gegenstand der Erfindung sind Faserverbundbauteile auf Polyisocyanurat- und Polyurethanbasis enthaltend eine oder mehrere Faserschichten, die mit Polyurethan und Polyisocyanurat getränkt sind, wobei das Polyurethan und Polyisocyanurat aus einem Reaktionsgemisch erhältlich ist, das aus
A) einem oder mehreren Polyisocyanaten
B) einem oder mehreren Polyolen
C) einem oder mehreren Polyepoxiden
D) einem oder mehreren latenten Katalysatoren und
E) gegebenenfalls Additiven
F) gegebenenfalls Fasermaterial besteht,
wobei die Mischung bei 25 °C eine Viskosität von 20 bis 500 mPas, bevorzugt 50 bis 400 mPas, besonders bevorzugt 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt 11:1 bis 14:1, ein Verhältnis der Anzahl der NCO-Gruppen der Komponente A) zu der Anzahl der Epoxidgruppen der Komponente C) von 2:1 bis 25:1, bevorzugt 7:1 bis 15:1, ganz besonders bevorzugt 10:1 bis 14:1 und ein Verhältnis der Anzahl der Epoxid-Gruppen der Komponente C) zu der Anzahl der Mole an latentem Katalysator der Komponente D) von 1,1:1 bis 12:1, bevorzugt 3:1 bis 10:1, ganz besonders bevorzugt 5:1 bis 7:1 aufweist.

Polyisocyanurate (PIR) bilden sich durch die Trimerisation von Isocyanatgruppen. Der Isocyanuratring ist sehr stabil. Die Isocyanate reagieren am Anfang vorzugsweise mit Polyolen zu Polyurethanen. Im weiteren Verlauf, wenn die meisten OH-Gruppen abreagiert sind, kommt es zur Polyisocyanuratbildung. Die erfindungsgemäßen faserverstärkten Faserverbundbauteile sind kompakt, optisch transparent und haben eine gute Hitzestabilität.

Das Polyurethan/Polyisocyanurat enthält im Prinzip keine Oxazolidinongruppen. Sollten wider Erwarten doch Oxazolidinongruppen im Polyurethan/Polyisocyanurat durch untergeordnete Nebenreaktion auftreten, so liegt deren Gehalt unter 5 Gew.-%, bezogen auf Polyurethan/Polyisocyanurat. Die Oxazolidinongruppen entstehen, wenn Polyisocyanate mit Epoxiden reagieren. Diese stören im Faserverbundbauteil nicht.

Die Viskosität wird gemäß DIN EN ISO 1342 und entsprechend den Angaben im Beispielteil bestimmt.

Die Polyurethan-/Polyisocyanuratmatrix des Faserverbundbauteils enthält einen Polyisocyanuratanteil von 55-85 Gew.-%, bevorzugt von 65-75 Gew.-%.

Der Faseranteil im Faserverbundteil beträgt vorzugsweise mehr als 50 Gew.-%, besonders bevorzugt mehr als 55 Gew.-%, bezogen auf das Gesamtgewicht des Faserverbundbauteils. Der Faseranteil kann bei Glasfasern beispielsweise durch Veraschung nachträglich bestimmt und die Einwaage kontrolliert werden.

Das Faserverbundbauteil, vorzugsweise das Glasfaserverbundbauteil, kann optisch transparent sein. Aufgrund der Transparenz kann das Bauteil direkt auf z.B. Lufteinschlüsse optisch untersucht werden.

Es können die bekannten Verfahren zur Herstellung von Bauteilen für die erfindungsgemäßen Verbundbauteile genutzt werden, wie z.B. Handlaminieren (Nasspressverfahren), Spritzpressen, Formpressen (SMC = Sheet molding compound oder BMC = Bulk molding compound) Harzinjektionsverfahren (=Resin Transfer Moulding) oder vakuumunterstützte Infusionsverfahren (beispielsweise VARTM (Vacuum Assisted Resin Transfer Moulding)) oder die Prepregtechnologie.

Ein weiterer Gegenstand der Erfindung ist ein Verfahren zur Herstellung der erfindungsgemäßen Faserverbundbauteile, wobei
a) eine Mischung aus
   A) einem oder mehreren Polyisocyanaten
   B) einem oder mehreren Polyolen
   C) einem oder mehreren Polyepoxiden
   D) einem oder mehreren latenten Katalysatoren
   E) gegebenenfalls Additiven
   F) gegebenenfalls Fasermaterial
   hergestellt wird, wobei die Mischung bei 25 °C eine Viskosität von 20 bis 500 mPas, bevorzugt 50 bis 400 mPas, besonders bevorzugt 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt 11:1 bis 14:1, ein Verhältnis der Anzahl der NCO-Gruppen der Komponente A) zu der Anzahl der Epoxidgruppen der Komponente C) von 2:1 bis 25:1, bevorzugt 7:1 bis 15:1, ganz besonders bevorzugt 10:1 bis 14:1 und ein Verhältnis der Anzahl der Epoxid-Gruppen der Komponente C) zu der Anzahl der Mole an latentem Katalysator der Komponente D) von 1,1:1 bis 12:1, bevorzugt 3:1 bis 10:1, ganz besonders bevorzugt 5:1 bis 7:1 aufweist,
b) gegebenenfalls ein Fasermaterial in einer Werkzeughälfte eines Werkzeugs vorgelegt wird,
c) die unter a) hergestellte Mischung in das Werkzeug eingebracht wird, wobei das gegebenenfalls unter Schritt b) vorgelegte Fasermaterial getränkt wird,
d) die Mischung bei einer Temperatur von 50 °C bis 170 °C, bevorzugt von 110 °C bis 140 °C, aushärtet, wobei Fasermaterial in der Mischung unter Schritt a) oder unter Schritt b) oder in beiden Schritten a) und b) eingesetzt wird.

Vorzugsweise wird die Werkzeughälfte mit einem Trennmittel versehen, bevor das Fasermaterial oder die Reaktionsmischung eingebracht wird. Es können weitere Schutz- oder Dekor-Schichten vor dem Einbringen des Fasermaterials oder der Reaktionsmischung in die Werkzeughälfte eingetragen werden, wie beispielsweise eine oder mehrere Gelcoatschichten. Dekorschichten können je nach gewünschten Eigenschaften aus unterschiedlichen Materialien bestehen. Als Dekorschicht können beispielsweise allgemein bekannte, insbesondere thermoplastische kompakte oder geschäumte Folien eingesetzt werden, wie z.B. auf der Basis von Acrylnitril-Butadien-Styrol (ABS), Polymethylmethacrylat (PMMA), Acrylnitril-Styrol-Acrylester (ASA), Polycarbonat (PC), thermoplastischem Polyurethan, Polypropylen, Polyethylen, und/oder Polyvinylchlorid (PVC). Ferner können auch beschichtete oder lackierte Folien verwendet werden. Als Dekorschichten kommen auch alle üblichen Metallfolien in Betracht, wie z.B. Aluminiumfolie oder Stahlfolie. Weiterhin können auch flächige Textilstoffe, Papier, Holz (z.B. Furniere) oder auch Sprüh- oder RIM-Häute aus Polyurethan als Dekorschicht verwendet werden. Die dekorative Oberflächenschicht kann die vordere wie auch die rückseitige Faserverbundbauteilfläche oder auch beide Flächen bilden.

Nach dem bevorzugten RTM-Verfahren (Resin Transfer Molding) wird nach dem Einlegen des Fasermaterials in die Werkzeughälfte mit einem Werkzeuggegenstück die Form geschlossen, eventuell Vakuum in der Werkzeugform erzeugt und anschließend die Reaktionsmischung unter Druck eingetragen. Falls erforderlich können zwischen den Werkzeughälften und dem Fasermaterial noch sogenannte Fließhilfen (z.B. in Form von druckstabilen, aber harzdurchlässigen Matten) eingebracht werden, die nach der Aushärtung wieder entfernt werden können.

Die erfindungsgemäß eingesetzten Reaktionsharzmischungen haben niedrige Viskositäten, lange Verarbeitungszeiten und weisen kurze Aushärtezeiten bei niedrigen Aushärtetemperaturen auf und ermöglichen so die schnelle Fertigung von Faserverbundbauteilen.

Ein weiterer Vorteil der erfindungsgemäß eingesetzten Reaktionsharzmischungen ist das verbesserte Verarbeitungsverhalten durch eine schnelle Verträglichkeit der Mischung aus Polyol und Polyepoxid mit dem Polyisocyanat. Bei den bisher verwendeten Systemen aus Polyisocyanaten und Polyolen müssen die Komponenten vorab für mehrere Minuten vermischt werden, da erst durch die beginnende Urethanbildung eine Verträglichkeit der Komponenten und eine Homogenität der Mischung erreicht wird, die für die Verarbeitung notwendig ist. Ansonsten käme es zu unvollständiger Härtung und zu inhomogenen Produkten. Die Komponenten der Reaktionsharzmischungen können bei 20 bis 100 °C, bevorzugt bei 25 bis 70 °C, gemischt und auf das Fasermaterial aufgetragen werden.

Um eine gute Tränkung der Fasern zu gewährleisten, sollte die Reaktionsharzmischung beim Einfüllen vorzugsweise dünnflüssig sein und möglichst lange dünnflüssig bleiben. Dies ist besonders bei großen Bauteilen nötig, da hier die Füllzeit sehr lang ist. Vorzugsweise liegt die Viskosität der erfindungsgemäßen Reaktionsharzmischungen bei 25°C direkt nach dem Vermischen zwischen 20 und 500 mPas, bevorzugt zwischen 50 und 400 mPas, besonders bevorzugt zwischen 60 und 350 mPas. Bevorzugt ist die Viskosität der erfindungsgemäßen Reaktionsharzmischungen bei einer konstanten Temperatur von 25°C 30 Minuten nach dem Vermischen der Komponenten kleiner als 800 mPas, bevorzugt kleiner als 500 mPas und besonders bevorzugt kleiner als 300 mPas. Die Viskosität wurde 30 Minuten nach dem Vermischen der Komponenten bei einer konstanten Temperatur von 25 °C mit einem Rotationsviskosimeter bei einer Scherrate von 60 1/s bestimmt. Beim Einsatz von Fasermaterial F) in der Polyolkomponente B) ist eine niedrige Viskosität der Reaktionsharzmischung ebenfalls vorteilhaft, so dass neben einem hohen Füllstoffgehalt eine gute Tränkung der Fasermatten gewährleistet ist.

Die erfindungsgemäß eingesetzten Reaktionsmischungen können auf Gießmaschinen mit Statikmischern oder mit dynamischen Mischern verarbeitet werden, da nur eine kurze Mischzeit benötigt wird. Dies ist bei der Herstellung der erfindungsgemäßen Faserverbundbauteile von großem Vorteil, da die Reaktionsmischung für eine gute Tränkung möglichst dünnflüssig sein muss. Eine nicht erfindungsgemäße Mischung, die erst vorab für einige Minuten vermischt werden muss, zeigt durch die Bildung von Urethangruppen bereits eine zu hohe Viskosität.

Ein weiterer Vorteil der erfindungsgemäß eingesetzten Reaktionsmischung ist, dass sie in einem einstufigen Prozess verarbeitet werden kann und dass eine niedrige Aushärtungstemperatur von unter 140 °C ausreichend ist.

Als Polyisocyanatkomponente A) kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.% liegen. Der NCO-Gehalt kann nach DIN 53185 bestimmt werden. Die Viskosität des Isocyanates sollte vorzugsweise ≤ 250 mPas (bei 25°C), bevorzugt ≤ 50 mPas (bei 25°C) und besonders bevorzugt von ≤ 30 mPas (bei 25°C) sein.

Die Polyole B) können beispielsweise ein zahlenmittleres Molekulargewicht Mₙ von ≥ 200 g/mol bis ≤ 8000 g/mol, bevorzugt von ≥ 500 g/mol bis ≤ 5000 g/mol und besonders bevorzugt von ≥ 1000 g/mol bis ≤ 3000 g/mol aufweisen. Die OH-Zahl der Komponente B) gibt im Falle eines einzelnen zugesetzten Polyols dessen OH-Zahl an. Im Falle von Mischungen wird die zahlenmittlere OH-Zahl angegeben. Dieser Wert kann anhand von DIN 53240 bestimmt werden. Die Polyolformulierung enthält vorzugsweise als Polyole solche, die eine zahlenmittlere OH-Zahl von 25 bis 1000 mg KOH/g, bevorzugt von 30 bis 400 mg KOH/g und besonders bevorzugt von 40 bis 80 mg KOH/g aufweisen. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt. Bevorzugt haben die eingesetzten Polyole eine mittlere Funktionalität von 1,8 bis 4,0, besonders bevorzugt 1,9 bis 2,5.

Erfindungsgemäß können Polyetherpolyole, Polyesterpolyole oder Polycarbonatpolyole eingesetzt werden. Geeignete Polyetherpolyole sind Additionsprodukte von Styroloxid, Ethylenoxid, Propylenoxid und/oder Butylenoxid an di- oder polyfunktionelle Startermoleküle. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren oder Hydroxylgruppen aufweisende Öle.

Die Polyole B) können auch Fasern, Füllstoffe und Polymere enthalten.

Als Polyepoxide C) sind niedrigviskose aliphatische, cycloaliphatische oder aromatische Epoxide sowie deren Mischungen besonders gut geeignet. Die Polyepoxide können durch Umsetzung von Epoxiden, beispielsweise Epichlorhydrin, mit Alkoholen dargestellt werden. Als Alkohole können beispielsweise Bisphenol A, Bisphenol F, Bisphenol S, Cyclohexandimethanol, Phenol-FormaldehydHarze, Kresol-Formaldehyd-Novolake, Butandiol, Hexandiol, Trimethylolpropan oder Polyetherpolyole eingesetzt werden. Es können auch Glycidylester, beispielsweise von Phthalsäure, Isophthalsäure oder Terephthalsäure sowie deren Mischungen eingesetzt werden. Epoxide können auch durch die Epoxidierung von Doppelbindungen enthaltenden organischen Verbindungen hergestellt werden, beispielsweise durch die Epoxidierung von fetten Ölen, wie Sojaöl, zu epoxidiertem Sojaöl. Die Polyepoxide können auch monofunktionelle Epoxide als Reaktivverdünner enthalten. Diese können durch die Reaktion von Alkoholen mit Epichlorhydrin hergestellt werden, beispielsweise Monoglycidylether von C4-C18 Alkoholen, Cresol, p-tert.-Butylpenol. Weitere einsetzbare Polyepoxide sind beispielsweise in "Handbook of Epoxy resins" von Henry Lee und Kris Neville, McGraw-Hill Book Company, 1967, beschrieben. Bevorzugt werden Glycidylether von Bisphenol A eingesetzt, die ein Epoxidäquivalentgewicht im Bereich von 170 - 250 g/eq, besonders bevorzugt mit einem Epoxidäquivalentgewicht im Bereich von 176 bis 196 g/eq haben. Der Epoxidquivalentwert kann nach ASTM D-1652 bestimmt werden. Beispielsweise kann hierfür das Eurepox 710 oder das Araldite® GY-250 eingesetzt werden.

Als latente Katalysatoren D) werden bevorzugt Katalysatoren eingesetzt, die im Bereich zwischen 50°C und 120°C katalytisch aktiv sind. Typische latente Katalysatoren sind beispielsweise blockierte Amin- und Amidin-Katalysatoren der Hersteller Air Products (wie z.B. Polycat® SA-1/10, Dabco KTM 60) und Tosoh Corporation (wie z.B. Toyocat® DB 2, DB 30, DB 31, DB 40, DB 41, DB 42, DB 60, DB 70) und Huntsman Corporation (wie z.B. Accelerator DY 9577). Es können aber auch alle weiteren, typischen latenten Katalysatoren aus der Polyurethanchemie mit einer sogenannten Schalttemperatur von 50°C bis 120°C eingesetzt werden.

Als latente Katalysatoren D) können die bekannten Katalysatoren, meist Basen (tertiäre Amine, Salze schwacher Säuren wie Kaliumacetat) und organische Metallverbindungen eingesetzt werden. Bevorzugte latent-reaktive Katalysatoren sind Salze von tertiären Aminen. Diese latent-reaktiven Katalysatoren lassen sich beispielsweise durch chemische Blockierung eines katalytisch aktiven Amins erhalten. Die chemische Blockierung kann durch die Protonierung eines tertiären Amins mit einer Säure wie zum Beispiel Ameisensäure, Essigsäure, Ethylhexansäure oder Ölsäure oder eines Phenols oder durch Bortrichlorid erfolgen. Trialkylamine und heterozyklische Amine können als Amin verwendet werden, beispielsweise Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Dimethyloctylamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Penta-methyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en, und 1,5-diazabicyclo[4.3.0]-5-nonan.

Beispiele für kommerziell verfügbare latent-reaktive Katalysatoren sind das Polycat® SA1/10 (Phenol-blockiertes 1,8-Diazabicyclo[5.4.0]undec-7-en (=DBU)), Polycat® SA 102/10, DABCO® 8154 (Ameisensäure-blockiertes Triethylendiamin) oder DABCO® WT. Besonders bevorzugt ist Trichlor(N,N-dimethyloctylamin)bor.

Gegebenenfalls können Additive E) zugesetzt werden. Hierbei handelt es sich beispielsweise um zusätzliche Katalysatoren, Entlüfter, Entschäumer, Inhibitoren, Füllstoffe und Verstärkungsstoffe. Weitere bekannte Additive und Zusatzmittel können bei Bedarf verwendet werden.

Zur Verbesserung der Brandbeständigkeit können der Matrix zudem Flammschutzmittel zugesetzt werden, z.B. phosphorhaltige Verbindungen, vor allem Phosphate und Phosphonate, sowie auch halogenierte Polyester und Polyole oder Chlorparaffine. Ferner können auch nicht-flüchtige Flammschutzmittel wie Melamin oder expandierbarer Graphit (Blähgraphit) zugesetzt werden, welches sich unter Flammeinwirkung stark ausdehnt und dabei die Oberfläche vor weiterer Hitzeeinwirkung versiegelt.

Als Fasermaterial können geschlichtete oder ungeschlichtete Fasern, beispielsweise Glasfasern, Kohlefasern, Stahl- bzw. Eisenfasern, Naturfasern, Aramidfasern, Polyethylenfasern, Basaltfasern oder Carbon Nanotubes (CNTs) eingesetzt werden. Besonders bevorzugt sind Glasfasern und Kohlefasern. Die Fasern können Längen von 0,4 bis 5000 mm, bevorzugt 0,4 bis 2000 mm, besonders bevorzugt 0,4 bis 1000 mm aufweisen. Es können auch sogenannte Kurzfasern mit einer Länge von 0,4 bis 50 mm verwendet werden. Endlosfaserverstärkte Verbundbauteile können durch den Einsatz von kontinuierlichen Fasern hergestellt werden. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt werden Faser-Halbzeuge als Fasermaterial, wie beispielsweise Gewebe, Gelege, Geflechte, Matten, Vliese, Gestricke und Gewirke oder 3D-Faser-Halbzeuge, eingesetzt.

Die erfindungsgemäßen Faserverbundbauteile können zur Herstellung von Karosseriebauteilen von Automobilen oder im Flugzeugbau, zur Herstellung von Rotorblättern von Windkraftanlagen, in Bauteilen des Gebäude- bzw. Straßenbaus und sonstigen hochbelasteten Strukturen verwendet werden.

Die Erfindung soll anhand der nachfolgenden Beispiele näher erläutert werden.

### Beispiele

Es wurden erfindungsgemäße Reaktionsharzmischungen und faserverstärkte Verbundbauteile aus Polyisocyanaten, Polyolen, Polyepoxiden und latenten Katalysatoren hergestellt und mit nicht erfindungsgemäßen Reaktionsharzmischungen und ggf. Verbundbauteilen aus Polyisocyanaten, Polyolen und Polyepoxiden, ggf. mit latenten oder nicht-latenten Katalysatoren, verglichen.

Für die Herstellung des faserverstärkten Verbundbauteils im RTM-Verfahren (Beispiel 1 und 4) wurde ein Glasfasergewebe (0°/90° Glasgewebe der Fa. Hexcel 1102-290-0800, 290 g/m², K2/2) in die Werkzeugform eingelegt, so dass ein Glasfasergehalt von ca. 75 Gewichts-%, bezogen auf das spätere Bauteil, erreicht wurde. Die anschließend verschlossene Form wurde auf 130 °C erwärmt und die Reaktionsmischung anschließend unter Druck in die Form gedrückt und das fertige Faserverbundbauteil nach 15 Minuten entformt.

Für die Herstellung des faserverstärkten Verbundbauteils im Vakuuminfusionsverfahren (VARTM, Beispiel 2 und 3) wurde ein Teflonrohr mit einem Durchmesser von 6 mm mit Glasfaserrovings (Vetrotex® EC2400 P207) gefüllt, so dass ein Glasfasergehalt von ca. 65 Gewichts-%, bezogen auf das spätere Bauteil, erreicht wurde. Die eine Seite des Teflonrohres wurde in die Reaktionsmischung getaucht und an der anderen Seite wurde mit einer Ölpumpe Vakuum gezogen und die Reaktionsmischung dadurch eingesogen. Nachdem die Rohre befüllt waren, wurden sie bei 80 °C getempert. Das Teflonrohr wurde entfernt.

An den faserverstärkten Probenkörpern wurden die mechanischen Messungen vorgenommen. Der Glasfasergehalt wurde durch Veraschung der Probenkörper nach DIN EN ISO 1172 bestimmt. Die Biegefestigkeit und Biegedehnung wurde mit einem 3-Punkt-Biegeversuch nach DIN EN ISO 178 (RTM-Bauteile), bzw. 3597-2 (VARTM-Bauteile) bestimmt.

Die Viskosität wurde direkt nach dem Vermischen und 60 Minuten nach dem Vermischen der Komponenten mit einem Rotationsviskosimeter bei 25°C mit einer Scherrate von 60 1/s nach DIN EN ISO 1342 bestimmt.

Für die Bestimmung der Flammwidrigkeit wurde die vertikale Flammenausbreitung bei Kantenbeflammung mit einem Kleinbrennertest in Anlehnung an DIN 53438-2 bestimmt.

Im Rahmen dieser Patentanmeldung wird unter dem Index das Verhältnis von NCO/OH-Gruppen verstanden.

Mit der Hydroxyzahl (OH-Zahl) sind alle OH-funktionellen Bestandteile des erfindungsgemäßen Reaktionsgemisches gemeint.

### Verwendete Messgeräte:

DSC: Messgerät DSC Q 20 V24.8 Build 120 der Fa. Texas Instruments
Viskosimeter: MCR 501 der Fa. Anton Paar

### Beispiel 1:

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Danach wurde mit der Reaktionsmischung ein faserverstärktes Bauteil im RTM-Verfahren hergestellt.

### Beispiel 2:

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Danach wurde mit der Reaktionsmischung ein faserverstärktes Bauteil im Vakuuminfusionsverfahren hergestellt.

### Vergleichsbeispiel 3:

30 g eines Polyetherpolyols mit einer OH-Zahl von 380 mg KOH/g und einer Funktionalität von 3 (Viskosität bei 25 °C: 600 ± 50 mPas; Trimethylolpropan als Starter; Propylenoxidbasis) wurden mit 30 g Eurepox® 710 (Bisphenol A Epichlorhydrinharz mit durchschnittlichen Molekulargewicht ≤ 700 g/mol; Epoxidäquivalent 183-189 g/eq; Viskosität bei 25 °C: 10000-12000 mPas) vermischt und für 60 Minuten bei einem Druck von 1 mbar entgast. Danach wurden 53,03 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) zugegeben und unter Rühren für 5 Minuten bei 1 mbar entgast. Danach wurde mit der Reaktionsmischung ein faserverstärktes Bauteil im Vakuuminfusionsverfahren hergestellt.

### Vergleichsbeispiel 4:

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 38,5 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Die Herstellung eines faserverstärkten Bauteils nach dem RTM-Verfahren mit der Reaktionsmischung war nicht möglich.

### Vergleichsbeispiel 5 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 103,6 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Die Viskosität der Reaktionsmischung direkt nach dem Vermischen betrug 1850 mPas bei 25 °C und wurde sehr schnell größer. Daher war die Herstellung eines faserverstärkten Bauteils nach dem RTM- und VARTM-Verfahren nicht möglich.

### Vergleichsbeispiel 6 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 2,95 g Desmorapid DB (N,N-Dimethylbenzylamin der Fa. Rhein Chemie Rheinau GmbH, flüssig bei Raumtemperatur) vermischt, zur Polyolformulierung zugegeben und unter Rühren für 5 Minuten bei 1 mbar entgast. Die Viskosität stieg während der Herstellung der faserverstärkten Bauteile nach dem RTM- und dem VARTM-Verfahren zu schnell an und verhinderte die Herstellung von Faserverbundbauteilen.

### Vergleichsbeispiel 7 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 20,7 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Die Viskosität der Reaktionsmischung direkt nachdem Vermischen betrug 2060 mPas bei 25 °C und wurde sehr schnell größer. Daher war die Herstellung von Faserverbundbauteilen nach dem RTM- und VARTM-Verfahren nicht möglich.

| **Beispiele** | **1 (RTM)** | **2 (VARTM)** | **3* (VARTM) (nach** WO 2012/022683**)** | **4* (RTM)** |
|---|---|---|---|---|
| NCO/OH Äquivalentverhältnis | 12,4 | 12,4 | 1,4 | 12,4 |
| NCO/Epoxid Äquivalentverhältnis | 11,4 | 11,4 | 2,6 | 11,4 |
| Epoxid/Katalysator Äquivalentverhältnis | 6,4 | 6,4 | - | 1 |
| Viskosität (direkt nach dem Vermischen) [mPas] | 120 | 120 | 105 | 150 |
| Viskosität (60 min nach dem Vermischen) [mPas] | 320 | 320 | 4230 | 350 |
| Viskosität 24 h nach dem Vermischen (Topfzeit) [mPas] | 340 | 340 | fest | >50.000 |
| Entformzeit [min] | 15 (130 °C) | 360 (80 °C) | 600 (80 °C) | wird nicht fest (130 °C) |
| HDT nach DIN ISO 75 [8 MPa] | > 250 °C | - | - | - |
| Brandtest (in Anlehnung an Kleinbrennertest nach DIN 53438-2) | bestanden | bestanden | nicht bestanden | - |
| Glasübergangstemperatur T_{g} [°C] nach DIN EN ISO 53765 | 146 | 146 | 80 | - |
| E-Modul nach DIN ISO 3597-2 | 25400 | - | - | - |
| Glasfasergehalt nach DIN EN ISO 1172 [Gew.-%] | 75,0 | 65,0 | 64,0 | - |
| Biegefestigkeit [MPa] | 770 (nach ISO 178) | 862 (nach ISO 3597-2) | 855 (nach ISO 3597-2) | - |
| Biegedehnung [%] | 3,20 (nach ISO 178) | 3,23 (nach ISO 3597-2) | 3,08 (nach ISO 3597-2) | - |
| Interlaminare Scherfestigkeit 0°-Richtung (ShortBeam) | 54,40 (nach ISO 14130) | 40,2 (nach ISO 3597-4) | 43,76 (nach ISO 3597-4) | - |

| | | | | |
|---|---|---|---|---|
| ***Vergleichsbeispiele** | | | | |

| **Beispiele** | **5*** | **6*** | **7*** |
|---|---|---|---|
| NCO/OH Äquivalentverhältnis | 6,0 | 12,4 | 1,2 |
| NCO/Epoxid Äquivalentverhältnis | 5,74 | 11,4 | 1,15 |
| Epoxid/Katalysator Äquivalentverhältnis | 6,4 | 6,4 | 6,4 |
| Viskosität (direkt nach dem Vermischen) [mPas] | 1850 (25 °C) | 150 (25 °C) | 2060 (25 °C) |
| Viskosität (60 min nach dem Vermischen) [mPas] | 3100 | fest | fest |
| Viskosität 24 h nach dem Vermischen (Topfzeit) [mPas] | fest | fest | fest |

| | | | |
|---|---|---|---|
| ***Vergleichsbeispiele** | | | |

Das erfindungsgemäße Beispiel 1 ergibt ein kompaktes und optisch transparentes Verbundbauteil, das sehr gute mechanische Eigenschaften (E-Modul von über 25400 MPa, Biegedehnung von über 3,20 % und HDT-Wert von über 250 °C) aufweist. Für die Herstellung von faserverstärkten Verbundbauteilen ist vor allem eine sehr niedrige Viskosität nötig, da dadurch das Fasergelege bzw. Gewebe leichter und besser getränkt bzw. imprägniert wird, und die Formen deutlich schneller und gleichmäßiger gefüllt werden können. Dies ermöglicht kürzere Zykluszeiten, da die Formen nur kürzer belegt werden. Zudem ist gerade für große Faserverbundbauteile eine lange Topfzeit gewünscht. Im erfindungsgemäßen Beispiel 1 beträgt die Topfzeit mehr als 24 h. In dieser Zeit stieg die Viskosität des Systems kaum an. Bei 130°C härtete das Bauteil sehr schnell aus. Ein Nachtempern des erfindungsgemäßen Faserverbundbauteils war im Vergleich zum Bauteil aus Vergleichsbeispiel 3 nicht nötig.

Ein Vergleichsbeispiel mit dem System des Standes der Technik nach WO 2012/022683 war nach dem RTM-Verfahren nicht möglich, da die Viskosität des Systems viel zu schnell anstieg und eine erforderliche Benetzung der Glasfasern ungenügend war.

Das Beispiel 1 wurde wiederholt. Allerdings wurde das Bauteil im Beispiel 2 nach dem VARTM-Verfahren hergestellt.

Im Vergleichsbeispiel 3 wurde mit einem molaren Verhältnis NCO/OH von 1,4 gearbeitet. Da die Reaktion sehr schnell war, wurde ohne Katalysator gearbeitet. Die Viskosität im Vergleichsbeispiel 3 liegt 30 Minuten nach dem Vermischen bei 25 °C bereits bei 4230 mPas. Aufgrund der schnell ansteigenden Viskosität dauert der Füllvorgang länger, die Zykluszeit steigt deutlich an und die einzelne Form wird länger benutzt, was zu deutlich höheren Kosten führt. Außerdem ist die Benetzung der Fasern bei einer höheren Viskosität schwieriger, wodurch es zu Delamination im fertigen Faserverbundbauteil kommen kann.

Die Einwaagen und Verhältnisse im Vergleichsbeispiel 4 entsprechen denen aus Beispiel 1 mit der Ausnahme, dass das Äquivalentverhältnis von Epoxid zu latentem Katalysator von 6,4 auf 1 reduziert wurde, indem die Menge des zugesetzten Katalysators erhöht wurde. Die Topfzeit verkürzt sich hier um knapp 40 %. Zudem lässt sich die Matrix bei 130 °C nicht vollständig verfestigen. Auch nach 60 Minuten bei 130 °C liegt das Material teilweise unvernetzt vor. Es konnte also kein fertiges Faserverbundbauteil hergestellt werden.

Im Vergleichsbeispiel 5 wurde im Vergleich zum erfindungsgemäßen Beispiel 1 das NCO/OH-Äquivalentverhältnis von 12,4 auf 6 verringert, indem die Menge an eingesetztem Isocyanat (Desmodur® VP.PU 60RE11) reduziert wurde. Entsprechend verringerte sich das NCO/Epoxid-Äquivalentverhältnis von 11,4 auf 5,74. Als Folge der Reduzierung des NCO/OH-Äquivalentverhältnis lag die Anfangsviskosität bei ca. 1850 mPas bei 25 °C und machte somit ein homogenes Befüllen der Form unmöglich. Insbesondere die Faseranbindung des Matrixharzes ist bei hohen Viskositäten deutlich schwieriger. Zudem bot das System aus Vergleichsbeispiel 5 nicht die lange offene Topfzeit von über 24 Stunden bei Raumtemperatur, wie beim erfindungsgemäßen Beispiel 1, sondern lag bereits nach 4 Stunden fest vor. Es konnte kein fertiges Faserverbundbauteil hergestellt werden. Daher konnten auch keine weiteren mechanischen Eigenschaften ermittelt werden.

Die Einwaagen und Verhältnisse im Vergleichsbeispiel 6 entsprachen denen aus Beispiel 1 mit der Ausnahme, dass statt des latenten Katalysators Dy 9577®, eine molar entsprechende Menge an nichtlatentem Katalysator verwendet wurde, in diesem Fall Desmorapid DB. Auch in diesem Fall stieg die Viskosität des Reaktionsgemisches sehr schnell an, was ein homogenes Befüllen der Form, ohne Fehlstellen, unmöglich machte. Die offene Topfzeit verkürzte sich hier auf nur 25 min und war somit mehr als 23 Stunden geringer als im erfindungsgemäßen Beispiel 1. Es konnte kein fertiges Faserverbundbauteil hergestellt werden. Daher konnten auch keine weiteren mechanischen Eigenschaften ermittelt werden.

Im Vergleichsbeispiel 6 wurde im Vergleich zum erfindungsgemäßen Beispiel 1 das NCO/OH-Äquivalentverhältnis von 12,4 auf 1,2 verringert, indem die Menge an eingesetztem Isocyanat (Desmodur® VP.PU 60RE11) reduziert wurde. Entsprechend verringerte sich das NCO/Epoxid-Äquivalentverhältnis von 11,4 auf 1,15. Als Folge der Reduzierung des NCO/OH-Äquivalentverhältnis lag die Anfangsviskosität bei ca. 2060 mPas bei 25 °C, die innerhalb weniger Minuten sehr stark anstieg und somit ein homogenes Befüllen der Form unmöglich machte. Zudem bot das System aus Vergleichsbeispiel 6 nur eine sehr geringe offene Topfzeit von weniger als 12 Minuten. Es konnte kein fertiges Faserverbundbauteil hergestellt werden. Daher konnten auch keine weiteren mechanischen Eigenschaften ermittelt werden

Die sehr guten mechanischen Kennwerte und ein HDT von über 250 °C in Kombination mit einer sehr niedrigen Anfangsviskosität von 120 mPas und einer gleichbleibend niedrigen Viskosität über einen langen Zeitraum, was zu einer hohen Produktivität bei der Herstellung von großen faserverstärkten Bauteilen führt, wurde nur mit den erfindungsgemäßen Beispielen erreicht.

Bei den erfindungsgemäßen Beispielen 1 und 2 trat Selbstverlöschung 55 Sekunden nach Flammentzug auf, und die Flammhöhe war max. 60 mm. Im Gegensatz dazu zeigte sich bei Vergleichsbeispiel 3 keine Selbstverlöschung und die Flammhöhe war größer als 150 mm. Das Bauteil aus Vergleichsbeispiel 3 hat den Flammtest damit nicht bestanden.

## Patentansprüche

1. Faserverbundbauteile auf Polyisocyanurat- und Polyurethanbasis enthaltend eine oder mehrere Faserschichten, die mit Polyurethan und Polyisocyanurat getränkt sind, wobei das Polyurethan und Polyisocyanurat aus einem Reaktionsgemisch erhältlich ist, das aus
A) einem oder mehreren Polyisocyanaten
B) einem oder mehreren Polyolen
C) einem oder mehreren Polyepoxiden
D) einem oder mehreren latenten Katalysatoren
E) gegebenenfalls Additiven und
F) gegebenenfalls Fasermaterial besteht,
wobei die Mischung bei 25 °C eine Viskosität von 20 bis 500 mPas, bevorzugt 50 bis 400 mPas, besonders bevorzugt 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt 11:1 bis 14:1, ein Verhältnis der Anzahl der NCO-Gruppen der Komponente A) zu der Anzahl der Epoxidgruppen der Komponente C) von 2:1 bis 25:1, bevorzugt 7:1 bis 15:1, ganz besonders bevorzugt 10:1 bis 14:1 und ein Verhältnis der Anzahl der Epoxid-Gruppen der Komponente C) zu der Anzahl der Mole an latentem Katalysator der Komponente D) von 1,1:1 bis 12:1, bevorzugt 3:1 bis 10:1, ganz besonders bevorzugt 5:1 bis 7:1 aufweist.

2. Verfahren zur Herstellung der Faserverbundbauteile gemäß Anspruch1, wobei
a) eine Mischung aus
A) einem oder mehreren Polyisocyanaten
B) einem oder mehreren Polyolen
C) einem oder mehreren Polyepoxiden
D) einem oder mehreren latenten Katalysatoren
E) gegebenenfalls Additiven
F) gegebenenfalls Fasermaterial
hergestellt wird, wobei die Mischung bei 25 °C eine Viskosität von 20 bis 500 mPas, bevorzugt 50 bis 400 mPas, besonders bevorzugt 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt 11:1 bis 14:1, ein Verhältnis der Anzahl der NCO-Gruppen der Komponente A) zu der Anzahl der Epoxidgruppen der Komponente C) von 2:1 bis 25:1, bevorzugt 7:1 bis 15:1, ganz besonders bevorzugt 10:1 bis 14:1 und ein molares Verhältnis der Epoxid-Gruppen der Komponente C) zu der Anzahl der Mole an latentem Katalysator der Komponente D) von 1,1:1 bis 12:1, bevorzugt 3:1 bis 10:1, ganz besonders bevorzugt 5:1 bis 7:1 aufweist,
b) gegebenenfalls ein Fasermaterial in einer Werkzeughälfte eines Werkzeugs vorgelegt wird,
c) die unter a) hergestellte Mischung in das Werkzeug eingebracht wird, wobei das gegebenenfalls unter Schritt b) vorgelegte Fasermaterial getränkt wird,
d) die Mischung bei einer Temperatur von 50 °C bis 170 °C, bevorzugt von 110 °C bis 140 °C, aushärtet, wobei Fasermaterial in der Mischung unter Schritt a) oder unter Schritt b) oder in beiden Schritten a) und b) eingesetzt wird.

## Claims

1. Fibre composite components based on polyisocyanurate and on polyurethane, comprising one or more fibre layers impregnated with polyurethane and polyisocyanurate, wherein the polyurethane and polyisocyanurate are obtainable from a reaction mixture consisting of
A) one or more polyisocyanates
B) one or more polyols
C) one or more polyepoxides
D) one or more latent catalysts
E) optionally additives and
F) optionally fibre material,
wherein the mixture has a viscosity at 25°C of 20 to 500 mPas, preferably 50 to 400 mPas, more preferably 60 to 350 mPas (measured to DIN EN ISO 1342), a ratio of the number of NCO groups in component A) to the number of OH groups in component B) of 10:1 to 16:1, preferably 11:1 to 14:1, a ratio of the number of NCO groups in component A) to the number of epoxy groups in component C) of 2:1 to 25:1, preferably 7:1 to 15:1, most preferably 10:1 to 14:1, and a ratio of the number of epoxy groups in component C) to the number of moles of latent catalyst in component D) of 1.1:1 to 12:1, preferably 3:1 to 10:1, most preferably 5:1 to 7:1.

2. Process for producing the fibre composite components according to Claim 1, by
a) producing a mixture of
A) one or more polyisocyanates
B) one or more polyols
C) one or more polyepoxides
D) one or more latent catalysts
E) optionally additives
F) optionally fibre material,
wherein the mixture has a viscosity at 25°C of 20 to 500 mPas, preferably 50 to 400 mPas, more preferably 60 to 350 mPas (measured to DIN EN ISO 1342), a ratio of the number of NCO groups in component A) to the number of OH groups in component B) of 10:1 to 16:1, preferably 11:1 to 14:1, a ratio of the number of NCO groups in component A) to the number of epoxy groups in component C) of 2:1 to 25:1, preferably 7:1 to 15:1, most preferably 10:1 to 14:1, and a molar ratio of the epoxy groups in component C) to the number of moles of latent catalyst in component D) of 1.1:1 to 12:1, preferably 3:1 to 10:1, most preferably 5:1 to 7:1,
b) optionally, initially charging a fibre material in one half of a mould,
c) introducing the mixture produced in a) into the mould, with impregnation of any fibre material initially charged optionally in step b),
d) curing the mixture at a temperature of 50°C to 170°C, preferably of 110°C to 140°C, with use of fibre material in the mixture in step a) or in step b) or in both steps a) and b).

## Revendications

1. Composants composites fibreux à base de polyisocyanurate et de polyuréthane, contenant une ou plusieurs couches de fibres, qui sont imprégnées avec du polyuréthane et du polyisocyanurate, le polyuréthane et le polyisocyanurate pouvant être obtenus à partir d'un mélange réactionnel, qui est constitué par :
A) un ou plusieurs polyisocyanates,
B) un ou plusieurs polyols,
C) un ou plusieurs polyépoxydes,
D) un ou plusieurs catalyseurs latents,
E) éventuellement des additifs et
F) éventuellement un matériau fibreux,
le mélange présentant à 25 °C une viscosité de 20 à 500 mPas, de préférence de 50 à 400 mPas, de manière particulièrement préférée de 60 à 350 mPas (mesurée selon DIN EN ISO 1342), un rapport entre le nombre de groupes NCO du composant A) et le nombre de groupes OH du composant B) de 10:1 à 16:1, de préférence de 11:1 à 14:1, un rapport entre le nombre de groupes NCO du composant A) et le nombre de groupes époxyde du composant C) de 2:1 à 25:1, de préférence de 7:1 à 15:1, de manière tout particulièrement préférée de 10:1 à 14:1, et un rapport entre le nombre de groupes époxyde du composant C) et le nombre de moles de catalyseur latent du composant D) de 1,1:1 à 12:1, de préférence de 3:1 à 10:1, de manière tout particulièrement préférée de 5:1 à 7:1.

2. Procédé de fabrication de composants composites fibreux selon la revendication 1, dans lequel
a) un mélange de :
A) un ou plusieurs polyisocyanates,
B) un ou plusieurs polyols,
C) un ou plusieurs polyépoxydes,
D) un ou plusieurs catalyseurs latents,
E) éventuellement des additifs,
F) éventuellement un matériau fibreux,
est fabriqué, le mélange présentant à 25 °C une viscosité de 20 à 500 mPas, de préférence de 50 à 400 mPas, de manière particulièrement préférée de 60 à 350 mPas (mesurée selon DIN EN ISO 1342), un rapport entre le nombre de groupes NCO du composant A) et le nombre de groupes OH du composant B) de 10:1 à 16:1, de préférence de 11:1 à 14:1, un rapport entre le nombre de groupes NCO du composant A) et le nombre de groupes époxyde du composant C) de 2:1 à 25:1, de préférence de 7:1 à 15:1, de manière tout particulièrement préférée de 10:1 à 14:1, et un rapport molaire entre les groupes époxyde du composant C) et le nombre de moles de catalyseur latent du composant D) de 1,1:1 à 12:1, de préférence de 3:1 à 10:1, de manière tout particulièrement préférée de 5:1 à 7:1,
b) un matériau fibreux est éventuellement chargé initialement dans une moitié de moule d'un moule,
c) le mélange fabriqué en a) est introduit dans le moule, le matériau fibreux éventuellement chargé initialement à l'étape b) étant imprégné,
d) le mélange est durci à une température de 50 °C à 170 °C, de préférence de 110 °C à 140 °C, le matériau fibreux étant utilisé dans le mélange à l'étape a) ou à l'étape b) ou aux deux étapes a) et b).
